(19) Europäisches Patentamt
European Patent Office
Office européen des brevets

(11) EP 2 054 354 B1

(12) **EUROPEAN PATENT SPECIFICATION**

(45) Date of publication and mention of the grant of the patent:
**03.10.2018 Bulletin 2018/40**

(21) Application number: **07802793.5**

(22) Date of filing: **22.08.2007**

(51) Int Cl.:
***C03C 25/32*** *(2018.01)* ***C08J 5/08*** *(2006.01)*
***C08L 77/12*** *(2006.01)* ***D04H 1/64*** *(2012.01)*
***C03C 25/26*** *(2018.01)* ***C03C 25/328*** *(2018.01)*
***C08J 5/24*** *(2006.01)* ***C08G 69/44*** *(2006.01)*
***C09J 177/12*** *(2006.01)* ***D04H 1/4209*** *(2012.01)*
***D04H 1/587*** *(2012.01)*

(86) International application number:
**PCT/EP2007/058721**

(87) International publication number:
**WO 2008/023032 (28.02.2008 Gazette 2008/09)**

(54) **AQUEOUS UREA-MODIFIED BINDER FOR MINERAL FIBRES**
WÄSSRIGE HARNSTOFFMODIFIZIERTE BINDER FÜR MINERALFASERN
LIANT AQUEUX MODIFIÉ PAR L'ADDITION D'URÉE POUR LES FIBRES MINÉRALES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **23.08.2006 EP 06017563**
**17.11.2006 US 859524**

(43) Date of publication of application:
**06.05.2009 Bulletin 2009/19**

(73) Proprietor: **Rockwool International A/S**
**2640 Hedehusene (DK)**

(72) Inventor: **NISSEN, Povl**
**3650 Olstykke (DK)**

(74) Representative: **Letzelter, Felix Phillip et al**
**Meissner Bolte Patentanwälte**
**Rechtsanwälte Partnerschaft mbB**
**Widenmayerstraße 47**
**80538 München (DE)**

(56) References cited:
**EP-A- 1 170 265** **EP-A- 1 382 642**
**EP-A- 1 669 396**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 054 354 B1

Printed by Jouve, 75001 PARIS (FR)

## Description

### Field of the Invention

The present invention relates to an aqueous binder for mineral fibre products exhibiting reduced moisture take-up, a method of producing a bonded mineral fibre product using said binder, and a mineral fibre product comprising mineral fibres in contact with the cured binder,

### Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol/formaldehyde resins which can be economically produced and can be extended with urea prior to use as a binder However, the desire to minimize Volatile Organic Compound (VOC) emissions from products in conjunction with existing and proposed legislation directed to the lowering or elimination of formaldehyde have led to the development of formaldehyde-free binders such as, for instance, the binder compositions based on polycarboxy polymers and polyols, as disclosed in EP-A-583086, EP-A-990727 and US-A-5,318,990

Another group of non-phenol/formaldehyde binders for mineral fibres are the addition/elimination reaction products of aliphatic and/or aromatic anhyrides with alkanolamines, e.g., as disclosed in WO 99/36368, WO 01/05725, WO 01/96460, WO 02/06178, WO 2004/007615 and WO 2006/061249 These mineral fibre binders are water soluble and exhibit excellent binding properties in terms of curing speed and curing density. Still, the moisture take-up associated with these binders may lead to unsatisfactory mechanical strength of the bonded mineral fibre products, particularly after ageing.

EP-A-1 669 396 discloses such mineral wool binders comprising the condensation products of alkanolamines with carboxylic anhydrides and at least one hydrolytic stability-improving agent selected from monoalkanolamines, allylamines, peroxy compounds, epoxy compounds, compounds having at least one long-chain aliphatic moiety and at least one functional group, and SBR latices.

### Summary of the Invention

It was an object of the present invention to provide an aqueous binder composition which is particularly suitable for bonding mineral fibres, which exhibits excellent binding characteristics in terms of curing speed and strength, has good water solubility and dilutability and is capable of providing bonded mineral fibre products exhibiting a reduced moisture take-up and satisfactory mechanical strength, even after ageing

A further object of the present invention was to provide a mineral fibre product bonded with such a binder composition

In accordance with a first aspect of the present invention, there is provided an aqueous binder composition comprising

a water-soluble binder component obtainable by reacting at least one alkanolamine with at least one carboxylic anhydride in proportions such that the ratio of equivalents of amine groups plus hydroxy groups (NH+OH), excluding urea, to equivalents of carboxy groups (COOH) in the binder component is within the range of from 0.6 to 1.5 and, optionally, treating the reaction product with a base; and

urea in an amount of from 1 to 25 wt %, based on solids of the binder composition;

said alkanolamine, carboxylic anhydride and urea being employed in proportions such that the ratio of total equivalents of amine groups plus hydroxy groups (NH+OH), including urea, to equivalents of carboxy groups (COOH) in the binder composition is between and includes the following lower limit x and upper limit y:

$$x\ (\text{min}) = \frac{(\text{NH+OH})}{\text{COOH}} = 0.04\ x\ \text{wt.\%}\ \text{Urea} + 0\ 6$$

$$y\,(\max) = \frac{(NH+OH)}{COOH} = 0.04 \times wt.\%\ Urea + 1.5$$

In accordance with a second aspect of the present invention, there is provided a method of producing a bonded mineral fibre product which comprises the steps of contacting the mineral fibres or mineral fibre product with an aqueous binder composition as defined above, and curing the binder composition

In accordance with a third aspect of the present invention, there is provided a mineral fibre product comprising mineral fibres in contact with the cured binder composition defined above.

Mineral fibre products produced from the aqueous binder composition according to the present invention exhibit reduced moisture take-up and improved mechanical strength, even after ageing.

**Description of the Preferred Embodiments**

The formaldehyde-free aqueous binder composition according to the present invention comprises
a water-soluble binder component obtainable by reacting at least one alkanolamine with at least one carboxylic anhydride in proportions such that the ratio of equivalents of amine groups plus hydroxy groups (NH+OH), excluding urea, to equivalents of carboxy groups (COOH) in the binder component is within the range of from about 0.6 to about 1.5 and, optionally, treating the reaction product with a base; and
urea in an amount of from about 1 to about 25 wt.%, based on solids of the binder composition;
the alkanolamine, carboxylic anhydride and urea reactants being employed in proportions such that the ratio of total equivalents of amine groups plus hydroxy groups (NH+OH), including urea, to equivalents of carboxy groups (COOH) in the binder composition is between and includes the following lower limit x and upper limit y:

$$x\,(\min) = \frac{(NH+OH)}{COOH} = 0.04 \times wt.\%\ Urea + 0.6$$

$$y\,(\max) = \frac{(NH+OH)}{COOH} = 0.04 \times wt.\%\ Urea + 1.5$$

Binder Component

The binder component of the aqueous binder composition according to the present invention comprises the water-soluble reaction product of an alkanolamine with a carboxylic anhydride

Preferred alkanolamines for use in the preparation of binder component are alkanolamines having at least two hydroxy groups such as, for instance, alkanolamines represented by the formula

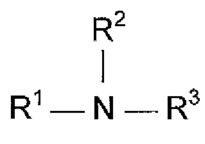

wherein $R^1$ is hydrogen, a $C_{1-10}$ alkyl group or a $C_{1-10}$ hydroxyalkyl group; and $R^2$ and $R^3$ are $C_{1-10}$ hydroxyalkyl groups

Preferably, $R^2$ and $R^3$, independently are $C_{2-5}$ hydroxyalkyl groups, and $R^1$ is hydrogen, a $C_{1-5}$ alkyl group or a $C_{2-5}$ hydroxyalkyl group Particularly preferred hydroxyalkyl groups are β-hydroxyalkyl groups.

Specific examples of suitable alkanolamines are diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane Diethanolamine is the currently preferred alkanolamine.

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred In a particularly preferred embodiment of the invention, two different anhydrides selected from cycloaliphatic and/or aromatic anhydrides are employed These different anhydrides are preferably reacted in sequence,

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3.

In the preparation of the binder component, the proportion of the alkanolamine and carboxylic anhydride reactants is selected such that the ratio of equivalents of amine plus hydroxy groups (NH+OH), excluding urea, to equivalents of carboxy groups (COOH) is within the range of from 0.6 to 1.5, preferably 0.8 to 1.5 and, more preferably 0 9 to 1.2

On the other hand, the properties of the final binder composition, such as curing behaviour, durability and moisture take-up are determined by the total ratio of reactive groups present Therefore, for optimum performance, the alkanolamine, carboxylic anhydride and urea reactants are employed in proportions such that the ratio of total equivalents of amine groups plus hydroxy groups (NH+OH), including urea, to equivalents of carboxy groups (COOH) in the binder composition is between and includes the following lower limit x and upper limit y:

$$x\ (\mathrm{min}) = \frac{(\mathrm{NH+OH})}{\mathrm{COOH}} = 0.04 \times \mathrm{wt.\%\ Urea} + 0.6$$

$$y\ (\mathrm{max}) = \frac{(\mathrm{NH+OH})}{\mathrm{COOH}} = 0.04 \times \mathrm{wt.\%\ Urea} + 1.5$$

The reaction between the alkanolamine and carboxylic anhydride reactants is carried out in the usual manner, for instance, as described in WO 99/36368, WO 01/05725, WO 02/06178, WO 2004/007615 and WO 2006/061249, the entire contents of which is incorporated herein by reference

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

Water may be added after the first anhydride has reacted, either together with the second anhydride or before addition of the second anhydride or at the end of the reaction, in an amount to make the binder easily pumpable.

In order to improve the water solubility and dilutability of the binder, a base may be added up to a pH of about 8, preferably a pH of between about 5-8, and more preferably a pH of about 6-7. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing Specific examples of suitable bases are ammonia ($NH_3$) and organic amines such as diethanolamine (DEA), triethanolamine (TEA) and dimethylethanolamine (DMEA) The base is preferably added to the reaction mixture after the reaction between the alkanol amine and the carboxylic anhydride(s) has been actively stopped by adding water.

If appropriate, an additional acid monomer may be employed in the reaction and is preferably added to the reaction mixture before addition of the anhydride reactant Specific examples of suitable acid monomers are di-, tri- and polycarboxylic acids such as adipic acid, citric acid, sebacic acid, azelaic acid, succinic acid, tartaric acid and trimellitic acid.

Furthermore, one or more polycarboxy crosslinking agents may be added after termination of the reaction and, optionally, together with the base Suitable polycarboxy crosslinking agents are, e.g., homopolymers and copolymers of acidic monomers such as acrylic acid, alkylacrylic acid (e.g. methacrylic acid) and maleic acid, and copolymers of such acidic monomers and acrylates. The weight percentage of these polycarboxy crosslinking agents is at least 0.5, preferably at least 10 wt %, and up to 50, preferably up to 30 wt.%, more preferably up to 15 wt.%, based on the binder composition.

Urea

Urea is added to the binder composition obtained in an amount of from about 1 wt.% to about 25 wt %, preferably about 3 wt.% to 17 wt.%, based on solids of the binder composition, in substance or, preferably, in aqueous solution

Other Components

The binder composition according to the present invention may comprise one or more conventional binder additives.

These include, for instance, silanes such as, e.g., γ-aminopropyltriethoxysilane, curing accelerators such as, e.g., β-hydroxylalkylamides; the free acid and salt forms of phosphoric acid, phosphonic acid, phosphinic acid, citric acid and adipic acid. Other strong acids such as boric acid, sulphuric acid, nitric acid and p-toluenesulphonic acid may also be used, either alone or in combination with the just mentioned acids, in particular with phosphoric, phosphonic or phosphinic acid. Other suitable binder additives are thermal stabilizers; UV stabilizers; hydrolytic stability-improving agents such as monoalkanolamines, allylamines, peroxy compounds, epoxy compounds, compounds having at least one long-chain aliphatic moiety and at least one functional group, and SBR latices; surface active agents; fillers such as clay, silicates, and magnesium sulfate; pigments such as titanium dioxide; hydrophobizing agents such as fluorinated compounds, mineral oils and silicone oils; flame retardants; corrosion inhibitors; silica; magnesium hydroxide and others,

These binder additives and adjuvants are used in conventional amounts generally not exceeding 20 % by weight of the binder solids. The amount of curing accelerator in the binder composition is generally between 0 05 to 5 wt %, based on solids, and also the amount of silanes is generally between 0.05 to 5 wt.%.

If appropriate, co-binders such as, e.g., carbohydrates may be employed in amounts of, for instance, up to 25-30 wt.%, based on binder solids

Final Binder Composition

The binder composition according to the present invention preferably has a solids content of from 10 to 40 wt.%, This is often the concentration range of the binder in storage containers before use

In a form ready for application, the binder preferably has a solids content of from 1 to 30 wt.%

For transportation, a solids content of the binder composition of from 60 to 75 wt.% is frequently employed.

In order to achieve adequate application properties and, in particular, spraying properties, the viscosity of the binder composition may be adjusted. This is accomplished, for instance, by controlling the type and concentration of binder components in the aqueous binder system Viscosity may be kept within the desired ranges e.g. by controlling the molecular weight of binder component (lower reaction temperature, stopping the reaction by adding water at an earlier reaction stage, etc.), and by properly adjusting the relative amounts of the binder components and water solvent.

Mineral fibre product

The formaldehyde-free aqueous binder composition according to the present invention may be applied to mineral fibres or mineral fibre products by conventional techniques such as, e.g., air or airless spraying, rotating disc atomization, padding, saturating, roll coating, curtain coating, beater deposition, or the like

The mineral fibres may be any of man-made vitreous fibres (MMVF), glass fibres, ceramic fibres, basalt fibres, slag wool, rock wool, stone wool and others The mineral fibre products are, for instance, woven and nonwoven fabrics, mats, batts, slabs, sheets and other shaped articles which find use, for example, as thermal or acoustical insulation materials, vibration damping, construction materials, facade insulation, reinforcing materials for roofing or flooring applications, as filter stock, as horticultural growing media and in other applications

For the manufacture of conventional thermal or acoustical insulation products, the binder is normally applied in an amount of 0.1 to 15 %, preferably 0.3-10 %, of the bonded mineral fibre product.

In general, the binder composition is applied, normally by spraying, immediately after fiberization of the mineral melt, whereupon the coated mineral wool is cured in a curing oven wherein heated air is passed through the mineral wool web to cure the binder Typically, the curing oven is operated at a temperature of from about 200°C to about 350°C Preferably, the curing temperature ranges from about 225 to about 300°C. Generally, the curing oven residence time is from 30 seconds to 20 minutes, depending on, for instance, the product density.

Besides conventional curing by heat (e.g. heated air) other curing methods may be used, for example curing with microwave or infrared radiation If desired, the mineral wool web may also be subjected to a shaping process before curing.

The bonded mineral fibre product emerging from the curing oven in the form of e.g. a batt may be cut to a desired format and, if appropriate, compressed for packaging and shipping. It may also be employed as an intermediate

for the manufacture of shaped articles and composite materials.

Although the formaldehyde-free aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, molded articles, coatings etc.

The following examples are intended to further illustrate the aqueous binder composition and the use thereof as a binder for mineral fibre products. Parts and percentages are by weight, unless indicated otherwise.

**Examples**

**Reference Example**

Preparation of binder components A1 to A6

X g of diethanolamine (DEA) is placed in a 1-litre glass reactor provided with an agitator and a heating/cooling jacket. The temperature of the diethanolamine is raised to 60°C whereafter Y1 g of tetrahydrophthalic anhydride (THPA) is added. After raising the temperature to and keeping it at 130°C, a second portion of Y2 g of tetrahydrophthalic anhydride is added, followed shortly by addition of Z g of trimellitic anhydride (TMA).

After reacting for 1 hour, the mixture is cooled to 95°C, W g of water added and the mixture is stirred for 1 hour. After further cooling of the reaction mixture to below 30°C, a binder component A is obtained having an equivalent ratio (NH+OH)/COOH as stated in Table 1 below.

Table 1

| | A1 | A2 | A3 | A4 | A5 | A6 |
|---|---|---|---|---|---|---|
| (NH+OH)/COOH | 1.0 | 1.6 | 1.3 | 1.6 | 1.0 | 1.4 |
| DEA (X) | 315 g | 315 g | 315 g | 315 g | 315 g | 315 g |
| THPA (Y1) | 274 g | 115 g | 177 g | 164 g | 183 g | 183 g |
| THPA (Y2) | 119 g | 58 g | 88 g | 82 g | 91 g | 91 g |
| TMA (Z) | 248 g | 219 g | 219 g | 156 g | 346 g | 173 g |
| Water (W) | 400 g | 400 g | 400 g | 400 g | 400 g | 400 g |

**Examples 1 to 5**

Preparation of binders 1, 3 and 5 according to the present invention and binders 2 and 4 (comparative)

For the preparation of binders 1, 3 and 5 according to the present invention and binders 2 and 4 (comparative) each of the binder components A1 to A5 is mixed with a binder component B which comprises urea in the amounts given in Table 2 below.

For the preparation of the final binder composition, to each of the compositions Nos. 1-5 is added a curing accelerator (2% based on solids of hypophosphorous acid), a coupling agent (3-aminopropyltriethoxy silane) and ammonia.

Table 2

| Binder No. | Component A Binder from Ref. Example | | Component B Urea | Amount of urea | (NH+OH)/COOH after urea |
|---|---|---|---|---|---|
| 1 | A1 | 40 g | 4,65 g | 15% | 1.6 |
| 2 (comparative) | A2 | 40 g | 4,22 g | 15% | 2.3 |
| 3 | A3 | 40 g | 2,76 g | 10% | 1.7 |
| 4 (comparative) | A4 | 40 g | 1,25 g | 5% | 1.8 |
| 5 | A5 | 40 g | 1,14 g | 5% | 1.2 |

**Comparative Example**

Preparation of comparative binder

In a manner similar to that described for Binders 1, 3 and 5 according to the present invention and binders 2 and 4 (comparative), a comparative binder is prepared from binder component A6 alone, i.e. no binder component (B) is used.

**Example 6**

Procedure for making gritbars

90 ml of binder solution adjusted to 15% solids are mixed with 450 g of shots. Out of the 450 g shots, 8 bars are made which are cured at 200°C for 2 hours.

On 4 of the bars, the 3-point bending strength is measured directly (dry strength), on the other 4 bars after aging by submersion of the bars in 80°C hot water for 3 hours (aged strength).

Moisture take-up

Approx. 0.5 g of binder solution having a solids content of about 25% (determined by curing at 200°C for 1 hour) is evenly spread over a quartz filter.

The filter is placed in a flash curing apparatus and cured at 225°C for 3 minutes at a differential pressure over the filter of 190 mm water column.

After curing, the filter is placed above 20-30 ml of ion-exchanged water in a plastic beaker with lid. The beaker is placed in a heating cupboard at 20°C, i.e. humidity conditions are 20°C, 100% RH.

The filter is weighed before application of binder, before and after curing in the flash curing apparatus and after 3, 6 and 10 days exposure in the humid atmosphere.

The amount of water absorbed can be determined from the above measurements. Normally, five filters of each binder to be tested are prepared, and the average result for each binder is determined.

Results from testing of the different binder compositions are shown in Fig. 1 and in Table 3 below.

Table 3

| Binder No. | 3-Point bending strength from gritbar testing | | Moisture take-up at 20°C, 100%RH mean$\pm 1\sigma$ |
|---|---|---|---|
| | Dry strength N/mm2 | Aged strength N/mm2 | |
| 1 | 7.5 | 3.3 | 12%$\pm$4 |
| 2 (comparative) | 6.0 | 1.6 | 33%$\pm$15 |
| 3 | 7.7 | 2.2 | 19%$\pm$9 |
| 4 (comparative) | 7.8 | 1.8 | 40%$\pm$17 |
| 5 | 6.7 | 2.4 | 12%$\pm$2 |
| Comparative | 7.6 | 2.5 | 10%$\pm$5 |

**Claims**

**1.** An aqueous binder composition for mineral fibres comprising:

a water-soluble binder component obtainable by reacting at least one alkanolamine with at least one carboxylic anhydride in proportions such that the ratio of equivalents of amine groups plus hydroxy groups (NH+OH), excluding urea, to equivalents of carboxy groups (COOH) in the binder component is within the range of from 0.6 to 1.5 and, optionally, treating the reaction product with a base; and

urea in an amount of from 1 to 25 wt.%, based on solids of the binder composition;

said alkanolamine, carboxylic anhydride and urea being employed in proportions such that the ratio of total equivalents of amine groups plus hydroxy groups (NH+OH), including urea, to equivalents of carboxy groups (COOH) in the binder composition is between and includes the following lower limit x and upper limit y:

$$x\,(min) = \frac{(NH+OH)}{COOH} = 0.04 \times wt.\%\ Urea + 0.6$$

$$y\,(max) = \frac{(NH+OH)}{COOH} = 0.04 \times wt.\%\ Urea + 1.5$$

2. The binder composition of claim 1, wherein the water-soluble binder component comprises the reaction product of at least one alkanolamine with at least one carboxylic anhydride in an equivalent ratio of amine and hydroxy groups (NH+OH), excluding urea, to carboxy groups (COOH) within the range of from 0.8 to 1.5.

3. The binder composition of claim 1 or 2, which comprises urea in an amount of from 3 to 17 wt.%, based on solids of the binder composition.

4. The binder composition of any one of claims 1 to 3, wherein at least one carboxylic anhydride is selected from cycloaliphatic and/or aromatic anhydrides

5. The binder composition of claim 4, wherein the carboxylic anhydride comprises a combination of a cycloaliphatic and an aromatic anhydride

6. The binder composition of 4 or 5, wherein the cycloaliphatic anhydride is selected from tetrahydrophthalic anhydride, hexahydrophthalic anhydride and methyl-tetrahydrophthalic anhydride.

7. The binder composition of any one of claims 4 to 6, wherein the aromatic anhydride is selected from phthalic anhydride, methylphthalic anhydride, trimellitic anhydride and pyromellitic dianhydride.

8. The binder composition of any one of claims 1 to 7, wherein the alkanolamine is selected from diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane

9. The binder composition of any one of claims 1 to 8, further comprising a curing accelerator and, optionally, other conventional binder additives.

10. The binder composition of claim 9, which comprises phosphinic acid as a curing accelerator.

11. A method of producing a bonded mineral fibre product which comprises the steps of contacting the mineral fibres or mineral fibre product with a binder composition according to any one of claims 1 to 10, and curing the binder composition

12. The method of claim 11 wherein curing is effected at a curing temperature of from 225°C to 300°C

13. Mineral fibre product comprising mineral fibres in contact with the cured binder composition according to any one of claims 1 to 10

## Patentansprüche

1. Wässrige Bindemittelzusammensetzung für Mineralfasern, umfassend:

eine wasserlösliche Bindemittelkomponente, erhältlich durch Umsetzen von mindestens einem Alkanolamin mit mindestens einem Carbonsäureanhydrid in solchen Anteilen, dass das Verhältnis der Äquivalente der Amingruppen plus Hydroxygruppen (NH + OH), ausgenommen Harnstoff, zu den Äquivalenten der Carboxygruppen (COOH) in der Bindemittelkomponente im Bereich von 0,6 bis 1,5 liegt und gegebenenfalls Behandeln des Reaktionsprodukts mit einer Base; und

Harnstoff in einer Menge von 1 bis 25 Gew.-%, bezogen auf die Feststoffe der Bindemittelzusammensetzung; wobei Alkanolamin, Carbonsäureanhydrid und Harnstoff in solchen Anteilen eingesetzt werden, dass das Verhältnis der Gesamtäquivalente von Amingruppen plus Hydroxygruppen (NH + OH), einschließlich Harnstoff, zu den Äquivalenten der Carboxygruppen (COOH) in der Bindemittelzusammensetzung zwischen und einschließlich der folgenden Untergrenze x und Obergrenze y liegt:

$$x\,(\text{min}) = \frac{(\text{NH+OH})}{\text{COOH}} = 0{,}04 \text{ x Gew.-\% Harnstoff} + 0{,}6$$

$$y\,(\text{max}) = \frac{(\text{NH+OH})}{\text{COOH}} = 0{,}04 \text{ x Gew.-\% Harnstoff} + 1{,}5$$

**2.** Bindemittelzusammensetzung nach Anspruch 1, wobei die wasserlösliche Bindemittelkomponente das Reaktionsprodukt von mindestens einem Alkanolamin mit mindestens einem Carbonsäureanhydrid in einem Äquivalentverhältnis von Amin- und Hydroxygruppen (NH + OH), ausgenommen Harnstoff, zu Carboxygruppen (COOH) im Bereich von 0,8 bis 1,5 umfasst.

**3.** Bindemittelzusammensetzung nach Anspruch 1 oder 2, die Harnstoff in einer Menge von 3 bis 17 Gew.-%, bezogen auf die Feststoffe der Bindemittelzusammensetzung, umfasst.

**4.** Bindemittelzusammensetzung nach irgendeinem der Ansprüche 1 bis 3, wobei mindestens ein Carbonsäureanhydrid ausgewählt ist aus cycloaliphatischen und/oder aromatischen Anhydriden.

**5.** Bindemittelzusammensetzung nach Anspruch 4, wobei das Carbonsäureanhydrid eine Kombination von einem cycloaliphatischen und einem aromatischen Anhydrid umfasst.

**6.** Bindemittelzusammensetzung nach 4 oder 5, wobei das cycloaliphatische Anhydrid ausgewählt ist aus Tetrahydrophthalsäureanhydrid, Hexahydrophthalsäureanhydrid und Methyltetrahydrophthalsäureanhydrid.

**7.** Bindemittelzusammensetzung nach irgendeinem der Ansprüche 4 bis 6, wobei das aromatische Anhydrid ausgewählt ist aus Phthalsäureanhydrid, Methylphthalsäureanhydrid, Trimellitsäureanhydrid und Pyromellitsäuredianhydrid.

**8.** Bindemittelzusammensetzung nach irgendeinem der Ansprüche 1 bis 7, wobei das Alkanolamin ausgewählt ist aus Diethanolamin, Triethanolamin, Diisopropanolamin, Triisopropanolamin, Methyldiethanolamin, Ethyldiethanolamin, n-Butyldiethanolamin, Methyldiisopropanolamin, Ethylisopropanolamin, Ethyldiisopropanolamin, 3-Amino-1,2-propandiol, 2-Amino-1,3-propandiol und Tris(hydroxymethyl)aminomethan.

**9.** Bindemittelzusammensetzung nach irgendeinem der Ansprüche 1 bis 8, ferner umfassend einen Härtungsbeschleuniger und gegebenenfalls andere herkömmliche Bindemitteladditive.

**10.** Bindemittelzusammensetzung nach Anspruch 9, die Phosphinsäure als einen Härtungsbeschleuniger enthält.

**11.** Verfahren zur Herstellung eines gebundenen Mineralfaserprodukts, das die Schritte des Kontaktierens der Mineralfasern oder des Mineralfaserprodukts mit einer Bindemittelzusammensetzung nach irgendeinem der Ansprüche 1 bis 10 und Härten der Bindemittelzusammensetzung umfasst.

**12.** Verfahren nach Anspruch 11, wobei das Härten bei einer Härtungstemperatur von 225 °C bis 300 °C durchgeführt wird.

**13.** Mineralfaserprodukt, umfassend Mineralfasern in Kontakt mit der gehärteten Bindemittelzusammensetzung nach irgendeinem der Ansprüche 1 bis 10.

## Revendications

**1.** Composition de liant aqueux pour fibres minérales comprenant :

un composant de liant hydrosoluble que l'on peut obtenir en faisant réagir au moins une alcanolamine avec au moins un anhydride carboxylique en des proportions telles que le rapport des équivalents de groupes amine plus groupes hydroxy (NH+OH), à l'exclusion de l'urée, aux équivalents de groupes carboxy (COOH) dans le composant de liant se situe dans la plage de 0,6 à 1,5 et, éventuellement, en traitant le produit de réaction avec une base ; et

de l'urée en une quantité de 1 à 25 % en poids sur la base des solides de la composition de liant ;

lesdits alcanolamine, anhydride carboxylique et urée étant employés en des proportions telles que le rapport des équivalents totaux des groupes amine plus les groupes hydroxy (NH+OH), y compris l'urée, aux équivalents de groupes carboxy (COOH) dans la composition de liant est entre et comprend la limite inférieure suivante x et la limite supérieure y :

$$x\,(\text{min}) = \frac{(NH + OH)}{COOH} = 0{,}04 \times \%\ \text{en poids d'urée} + 0{,}6$$

$$y\,(\text{max}) = \frac{(NH + OH)}{COOH} = 0{,}04 \times \%\ \text{en poids d'urée} + 1{,}5$$

**2.** Composition de liant selon la revendication 1, dans laquelle le composant de liant hydrosoluble comprend le produit de réaction d'au moins une alcanolamine avec au moins un anhydride carboxylique en un rapport d'équivalents de groupes amines et hydroxy (NH+OH), à l'exclusion de l'urée, aux groupes carboxy (COOH) dans la plage de 0,8 à 1,5.

**3.** Composition de liant selon la revendication 1 ou 2, qui comprend de l'urée en une quantité de 3 à 17 % en poids, sur la base des solides de la composition de liant.

**4.** Composition de liant selon l'un quelconque des revendications 1 à 3, dans laquelle au moins un anhydride carboxylique est choisi parmi des anhydrides cyclo-aliphatiques et/ou aromatiques.

**5.** Composition de liant selon la revendication 4, dans laquelle l'anhydride carboxylique consiste en une combinaison d'un anhydride cycloaliphatique et d'un anhydride aromatique.

**6.** Composition de liant selon 4 ou 5, dans laquelle l'anhydride cycloaliphatique est choisi parmi l'anhydride tétrahydrophtalique, l'anhydride hexahydrophtalique et l'anhydride méthyl-tétrahydrophtalique.

**7.** Composition de liant selon l'une quelconque des revendications 4 à 6, dans laquelle l'anhydride aromatique est choisi parmi l'anhydride phtalique, l'anhydride méthyl-phtalique, l'anhydride trimellitique et le dianhydride pyromellitique.

**8.** Composition de liant selon l'une quelconque des revendications 1 à 7, dans laquelle l'alcanolamine est choisie parmi la diéthanolamine, la triéthanolamine, la diisopropanolamine, la triisopropanolamine, la méthyl-diéthanolamine, l'éthyldiéthanolamine, la n-butyl-diéthanolamine, la méthyldiisopropanolamine, l'éthyl-isopropanolamine, l'éthyldiisopropanolamine, le 3-amino-1,2-propanediol, le 2-amino-1,3-propanediol et le tris(hydroxyméthyl)aminométhane.

**9.** Composition de liant selon l'une quelconque des revendications 1 à 8, comprenant en outre un accélérateur de durcissement et, éventuellement, d'autres additifs de liant classiques.

**10.** Composition de liant selon la revendication 9, qui comprend l'acide phosphinique comme accélérateur de durcissement.

**11.** Procédé de production d'un produit de fibre minérale liée qui comprend les étapes de mise en contact des fibres minérales ou du produit de fibre minérale avec une composition de liant selon l'une quelconque des revendications

1 à 10, et le durcissement de la composition de liant.

**12.** Procédé selon la revendication 11, dans lequel le durcissement est effectué à une température de durcissement de 225°C à 300°C.

**13.** Produit de fibre minérale comprenant des fibres minérales en contact avec la composition de liant durcie selon l'une quelconque des revendications 1 à 10.

FIG. 1

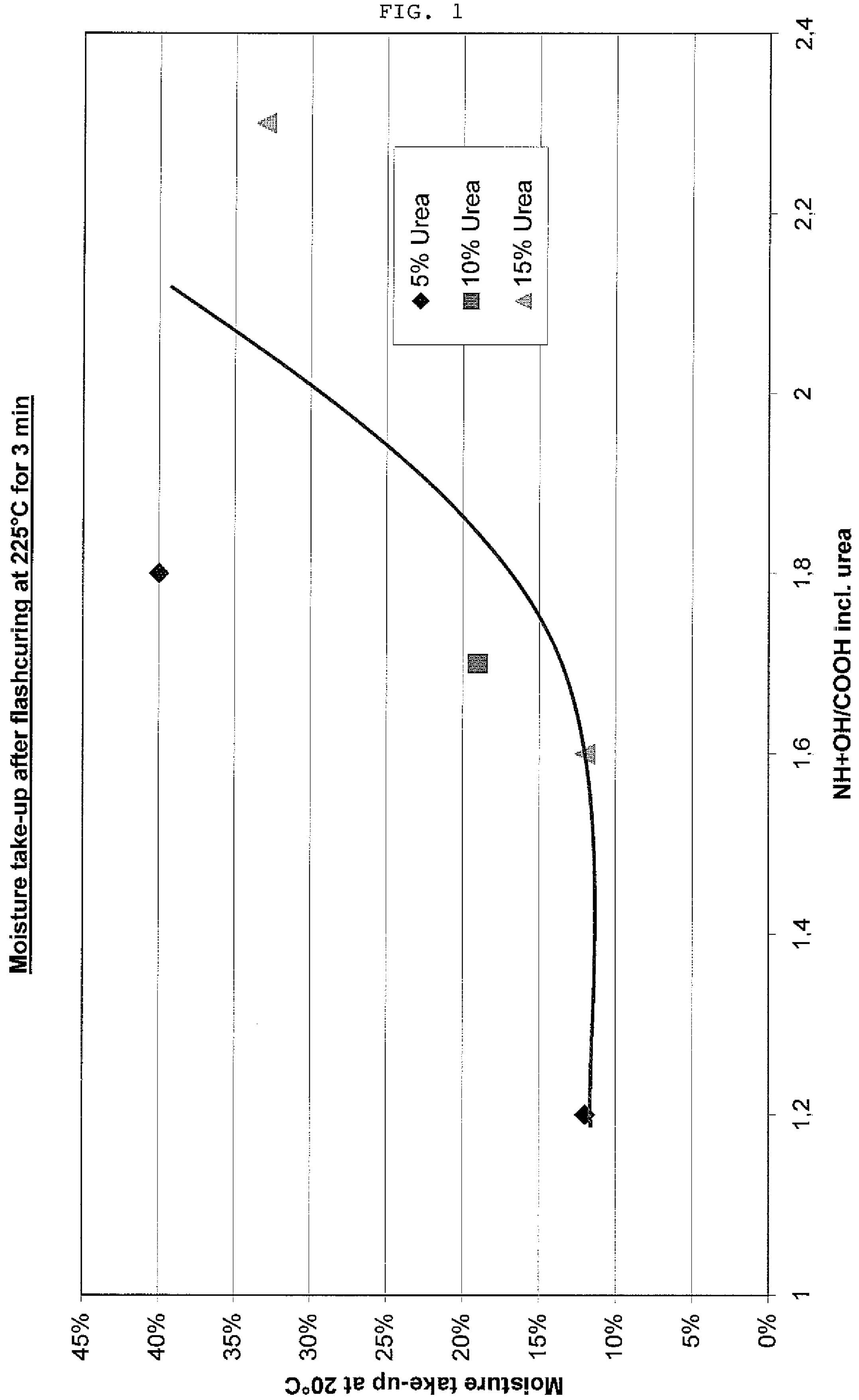
Moisture take-up after flashcuring at 225°C for 3 min
Moisture take-up at 20°C
NH+OH/COOH incl. urea
45%
40%
35%
30%
25%
20%
15%
10%
5%
0%
1
1,2
1,4
1,6
1,8
2
2,2
2,4
5% Urea
10% Urea
15% Urea

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 583086 A
- EP 990727 A
- US 5318990 A
- WO 9936368 A
- WO 0105725 A
- WO 0196460 A
- WO 0206178 A
- WO 2004007615 A
- WO 2006061249 A
- EP 1669396 A